# EUROPÄISCHE PATENTSCHRIFT

(11) **EP 3 366 961 B1**
(45) Veröffentlichungstag und Bekanntmachung des Hinweises auf die Patenterteilung: **18.11.2020**
(21) Anmeldenummer: 18150573.6
(22) Anmeldetag: 08.01.2018
(51) Int. Cl.: F16K 7/12, F16K 27/02, F16K 7/16

(54) **MEMBRANVENTIL MIT FREIEM DURCHGANG**
MEMBRANE VALVE WITH FREE PASSTHROUGH
CLAPET À MEMBRANE À PASSAGE LIBRE

(30) Priorität: 22.02.2017 DE 102017103572
(43) Veröffentlichungstag der Anmeldung: 29.08.2018
(73) Patentinhaber: SISTO Armaturen S.A., 6468 Echternach (LU)
(72) Erfinder: Hackenberger, Bernd, 6468 Echternach (LU); Löw, Pascal, 6468 Echternach (LU)
(74) Vertreter: Graf, Hans

(56) Entgegenhaltungen:
- WO-A1-2015/181709
- DE-A1- 19 505 747
- DE-B1- 1 450 575
- FR-A1- 2 287 633
- GB-A- 926 129
- US-A- 1 855 991
- US-A- 2 716 017
- US-A- 3 414 235
- US-A- 5 279 328
- US-A- 5 632 465
- US-A1- 2006 226 392

## Beschreibung

Die Erfindung betrifft ein Ventil mit einer Membran, die einen Rand aufweist, der in einer Kammerung angeordnet ist, die von einem Gehäuseteil und einer Haube gebildet wird.

Membranventile können zur Dosierung von unterschiedlichen Fluiden eingesetzt werden, beispielsweise von Gasen, Dämpfen oder Flüssigkeiten. Beispielsweise können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

In der DE 195 05 747 A1 wird ein Membranventil beschrieben, welches aus einem Gehäuse besteht, das ein Gehäuseoberteil und ein Gehäuseunterteil aufweist. Zwischen den beiden Gehäuseteilen ist eine Membran eingespannt, die einen Randwulst besitzt. Mithilfe einer außerhalb des Randwulstes gelegenen Verschraubung ist die Membran in einer Kammer eingespannt, die durch das Gehäuseoberteil und das Gehäuseunterteil gebildet wird. An den Randwulst ist ein außenliegender lappenartiger Fortsatz angeformt. Der lappenartige Fortsatz ist zwischen den entsprechenden Stirnflächen des Gehäuseoberteils und des Gehäuseunterteils angeordnet.

Weitere Schriften, die Membranventile mit zwischen zwei Gehäuseteilen eingespannten Membranen zum Gegenstand haben sind die DE1 450 575 B, US 2006/0226392 A1, GB 926,129 A und US 2,716017 A.

Der Einspannbereich einer Ventilmembran ist besonderen Anforderungen unterworfen. In erster Linie dient er der Halterung der Membran, deren Randbereich während des Schließens und in der Schließstellung einen radial nach innen gerichteten Zug ausgesetzt ist. Falls keine zusätzliche Abdichtung zwischen dem Unterteil und dem Oberteil des Gehäuses vorgesehen wird, kann der zwischen den Gehäuseteilen eingespannte Rand auch auf die Aufgabe der ruhenden Abdichtung übernehmen.

Die auf den Einspannbereich der Membran ausgeübte Dauerbeanspruchung führt, vor allem bei einem flachen Membranrand, oftmals zu einer gestaltlichen Veränderung, die schließlich zu einer Undichtigkeit des Gehäuses im betroffenen Bereich führen kann. Ein rechtzeitiges Nachspannen der den Membranrand beaufschlagenden Verschraubung vermag zwar den Zeitpunkt zu verschieben, an dem eine solche Undichtigkeit auftritt, sie kann den hierfür ursächlichen Prozess aber nicht aufhalten.

Bei Membranen, die einen zwischen den Gehäuseteilen eingespannten Randwulst besitzen, ist die geschilderte Problematik nicht oder nur im geringen Maße gegeben. Die auf den Randwulst ausgeübten Flächenpressung muss nicht so hoch sein wie bei einem flachen Rand, da der großräumige Wulst sich der ihm aufnehmenden Kammer anpasst, sodass eine gute Abdichtung sichergestellt ist. Die Kammerung des Einspannbereiches stellt eine dauerhafte Halterung sicher.

Die an sich vorteilhafte Kammerung des Randwulstes birgt jedoch ein Problem in sich, das seine Ursache in einer nicht auszuschließenden unsachgemäßen Montage oder Wartung hat. Wird nämlich das von dem Hersteller eines solchen Membranventils vorgeschriebene Anzugsdrehmoment der Verschraubung um ein erhebliches Maß überschritten, so erfolgt eine radial nach innen gerichtete Verdrängung eines Teils des Membranmaterials des Randwulstes. An der rundum verlaufenden die Kammer begrenzenden Engstelle, die durch die beiden Gehäuseteile gebildet wird, ergibt sich so eine Materialanhäufung, die vor allem während der Membranbetätigung zu Spannungen in diesem und im benachbarten Membranbereich führt. Diese Spannungen können zu einem Einreißen der Membranoberfläche und zumindest bei Membranen ohne Faserverstärkung schließlich zu einem Membranbruch führen.

Um ein über ein vorgeschriebenes Maß hinausgehendes Anziehen der Verschraubung zu vermeiden, könnten der Randwulst, die diesen aufnehmende Kammer und die Stirnflächen von Gehäuseunter- und -oberteil so gestaltet und bemessen werden, dass die maximal zulässige Pressung des Randwulstes erreicht wäre, wenn die Stirnflächen der Gehäuseteile zur Anlage aneinander kämen. Dies würde aber wegen der notwendigen Präzision einen hohen Aufwand bei der Fertigung der Membranen und der Gehäuseteile und möglicherweise zusätzlicher Anpassungsarbeiten notwendig machen.
In der DE 23 25 814 wird ein Ventil mit einer Membran beschrieben. Zwischen einem Gehäuseteil und einer Haube ist die Membran eingespannt. Die Betätigung der an einem Druckstück befestigten Membran erfolgt über eine Spindel mittels eines Handrades. Die Membran ist mit einem Verstärkungsgewebe ausgestattet. Sie hat an ihrem Rand einen Befestigungswulst, der in einer durch das Gehäuseteil und die Ventilhaube gebildeten Kammer gehaltert wird.

Bei den auf dem Markt befindlichen Membranventilen unterscheidet man Membranventile mit Steg und Membranventile mit freiem Durchgang. Membranventile mit Steg werden hauptsächlich zur Förderung von Fluiden eingesetzt, die nicht feststoffhaltig sind. Bei dieser Variante weist das Membranventil eine flache Membran auf, die eine lange Lebensdauer auch bei hohen Schaltzyklen gewährleistet. Weiterhin gibt es für Membranventile mit Steg ein großes Spektrum an einsetzbaren Werkstoffen. Zudem sind solche Membranventile mit Steg auch für höhere Drücke geeignet aufgrund der Abstützung der Membran mit einer Spirale.

Dagegen sind Membranventile mit freiem Durchgang auch für feststoffhaltige Medien einsetzbar, da kein Steg als Erhöhung in der Rohrleitung vorhanden ist und somit die Abrasionsgefahr deutlich geringer ist. Solche Membranventile ohne Steg, die einen freien Durchgang aufweisen, können beispielsweise auch für stark feststoffhaltige Medien eingesetzt werden, wie sie beispielsweise beim Abtransportieren von Gestein mittels Wasser vorkommen, zum Beispiel beim Bohren in Erdschichten. Nachteile solcher Ventile mit freiem Durchgang sind die geringe Haltbarkeit der Membran, die durch die starke Verformung beim Öffnen und Schließen auftritt. Weiterhin weisen solche Ventile mit freiem Durchgang, also ohne einen durch die Rohrleitung hervorragenden Steg eine geringere Vielfalt bei der Werkstoffauswahl auf. Zudem besitzen solche Ventile eine schlechtere Druckbelastbarkeit aufgrund der mangelnden Abstützung der Membran.

Aufgabe der Erfindung ist es, ein Membranventil anzugeben, das eine möglichst geringe Abrasion auch bei Förderung von feststoffhaltigen Medien aufweist. Gleichzeitig soll sich das Ventil durch eine möglichst geringe Belastung des Membranventils im Betrieb auszeichnen, sodass sich die Membran durch eine verhältnismäßig hohe Lebensdauer auszeichnet. Weiterhin soll eine zuverlässige Abdichtung des Ventils gewährleistet sein, sodass kein Medium austritt. Das Ventil soll sich durch geringe Strömungsverluste bzw. Druckverluste bei der Förderung und somit durch eine hohe Leistungsfähigkeit auszeichnen. Weiterhin soll das Membranventil möglichst preiswert herzustellen sein und einen flexiblen Einsatz bei unterschiedlichen Anwendungen gewährleisten.

Diese Aufgabe wird erfindungsgemäß durch ein Ventil mit den Merkmalen des Anspruchs 1 gelöst. Bevorzugte Varianten sind den Unteransprüchen, der Beschreibung und den Zeichnungen zu entnehmen.

Erfindungsgemäß ist die Kammerung, in der die Membran angeordnet ist, und/oder der Rand der Membran gewölbt ausgebildet. Bei herkömmlichen gekammerten Membranventilen nach dem Stand der Technik ist die Membran zwischen einem Gehäuseteil und einer Haube in einem Raum eingespannt, der in einer horizontalen Ebene ausgebildet ist. Dagegen ist die Kammerung des erfindungsgemäßen Ventils gewölbt ausgebildet und befindet sich nicht in einer horizontalen Ebene, sondern ist nach unten gekrümmt.

Während bei herkömmlichen Membranventilen der Bereich, in dem die Membran aufliegt, flach ausgebildet ist, weist das erfindungsgemäße Ventil einen gebogenen Bereich auf, in dem die Membran aufliegt. Diese Biegung ermöglicht zum einen verhältnismäßig freien Durchgang und gleichzeitig einen großen Membranhub. Weiterhin wird eine zuverlässige Abdichtung des Ventils durch die Kammerung gewährleistet und die Membran weist eine ausreichende Abstützung auf.

Gemäß der Erfindung weist die Haube eine umlaufende Erhebung auf, die gewölbt ausgebildet ist. Bei der Erhebung handelt es sich um einen nach unten ragenden Vorsprung, der vorzugsweise eine seitliche Wandung für die Kammerung der Membran bildet. Der Rand der Membran kann über diese Erhebung gestülpt werden. Dadurch ragt die umlaufende Erhebung in einen von der Membran umschlossenen Hohlraum hinein. Bei einer Variante der Erfindung ist die Erhebung oval umlaufend.

Erfindungsgemäß ist der Rand der Membran gewölbt ausgebildet. Während bei herkömmlichen gekammerten Membranen die Membranen einen Wulst bzw. Rand aufweisen, der auf einer Ebene liegt, weist das erfindungsgemäße Membranventil eine Membran auf, deren Rand gewölbt ausgebildet ist. Erfindungsgemäß hat die Wölbung im Bereich des Membransteges bzw. des Membranwehrs ihren tiefsten Punkt und steigt dann zu beiden Seiten hin an, sodass im Eintrittsbereich der Rand der Membran die höchste Erhebung hat, dann stetig abnimmt bis zu dem Ventilsitz bzw. dem Steg oder dem Wehr und dann wieder zum Austritt hin ansteigt und dann wieder auf die gleiche Höhe zunimmt.

Der Rand der Membran ragt vorzugsweise in vertikaler Richtung nach oben und weist auf seiner Oberseite eine umlaufende Stirnfläche auf, die bei einer bevorzugten Variante der Erfindung gewölbt ausgebildet ist. Somit liegt die Stirnfläche des Randes der Membran nicht in einer horizontalen Ebene sondern ist in vertikaler Richtung gekrümmt. Die Wölbung der Stirnseite des Randes der Membran verläuft parallel zur Fließrichtung.

Erfindungsgemäß weist die Haube einen flächigen Bereich aufweist, der gewölbt ausgebildet ist. Dieser flächige Bereich der Haube kann eine obere Begrenzung der Kammerung bilden. Der flächige Bereich kann als ein seitlich hervorstehender Rand der Haube ausgebildet sein, ähnlich wie die Krempe bei einem Hut.

Erfindungsgemäß weist das Gehäuseteil eine seitliche Wandfläche auf, deren Rand gewölbt ausgebildet ist und auch einen Teil der Kammerung für die Membran bilden kann.

Ergänzend oder alternativ kann das Gehäuseteil eine Auflagefläche für die Membran aufweisen, die gewölbt ausgebildet ist. Bei einer Variante der Erfindung ist diese Auflagefläche schräg ausgebildet.

Vorzugsweise weist das Ventil ein Druckstück zur Verformung der Membran auf.

Bei einer Variante der Erfindung umfasst das Ventil ein Druckverteilungselement, das vorzugsweise spiral- oder ringförmig ausgebildet ist.

Weitere Merkmale und Vorteile der Erfindung ergeben sich aus der Beschreibung eines Ausführungsbeispieles anhand von Zeichnungen und aus den Zeichnungen selbst, Dabei zeigt:
Figur 1 eine perspektivische Explosionszeichnung eines Membranventils,
Figur 2 eine seitliche Ansicht einer Haube des Membranventils,
Figur 3 eine seitliche Ansicht einer Membran des Membranventils,
Figur 4 eine perspektivische Ansicht einer Haube des Membranventils und Membran,
Figur 5 eine perspektivische Ansicht eines Gehäuseteils des Membranventils,
Figur 6 die von einer Haube und einem Gehäuseteil gebildete Kammerung für die Membran des Membranventils,
Figur 7 eine perspektivische Darstellung mit geöffneten Viertel zur Teilschnittdarstellung des Membranventils.

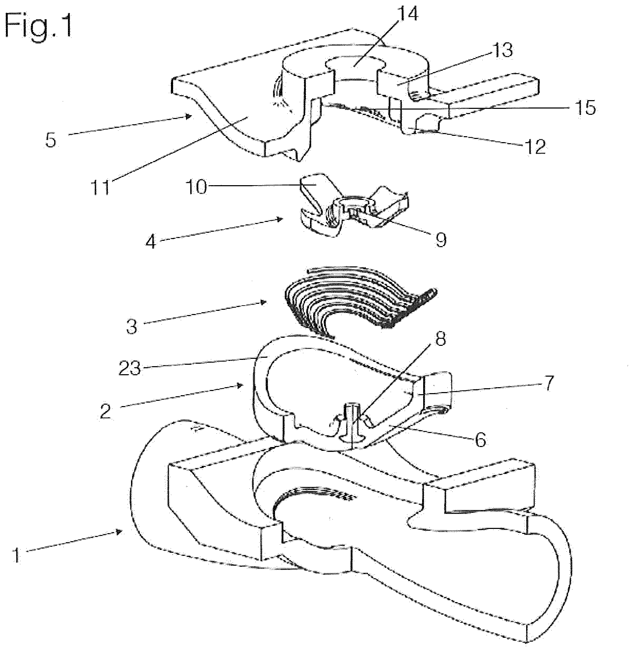

Figur 1 zeigt eine Explosionszeichnung eines Membranventils. Das Membranventil fasst ein Gehäuseteil 1, eine Membran 2, ein Druckverteilungselement 3, ein Druckstück 4 und eine Haube 5.

Die Membran 2 ist einstückig aus einem polymeren Material ausgebildet und weist einen flächigen Bereich 6 auf, an den sich ein Rand 7 anschließt. Der flächige Bereich 6 ist nach unten gewölbt ausgebildet. Der Rand 7 erstreckt sich mit Blick auf die Zeichnung in vertikaler Richtung nach oben. Der flächige Bereich 6 ist tellerförmig. Der Rand 7 ist wulstartig ausgebildet.

Der Rand 7 der Membran 2 ragt in vertikaler Richtung nach oben und weist auf seiner Oberseite eine umlaufende Stirnfläche 23 auf. Die Stirnfläche 23 ist gewölbt ausgebildet. Somit liegt die Stirnfläche 23 des Randes 7 der Membran 2 nicht in einer horizontalen Ebene sondern ist in vertikaler Richtung gekrümmt. Die Wölbung der Stirnfläche 23 weist im Bereich des Membransteges bzw. des Membranwehrs ihren tiefsten Punkt und steigt dann zu beiden Seiten hin an, sodass im Eintrittsbereich die Stirnfläche 23 des Randes 7 der Membran 2 die höchste Erhebung hat, dann stetig abnimmt bis zu dem Ventilsitz bzw. dem Steg oder dem Wehr und dann wieder zum Austritt hin ansteigt und dann wieder auf die gleiche Höhe zunimmt. Die Wölbung der Stirnfläche 23 des Randes 7 der Membran 2 verläuft somit parallel zur Strömungsrichtung.

Im Ausführungsbeispiel ist die Membran 2 so ausgebildet, dass sie in geschlossener Stellung die geringste Spannung im Material der Membran 2 herrscht. Bei einer Öffnung des Ventils wird die Membran 2 verformt und die Spannung im Membranmaterial steigt an.

In der Membran 2 ist formschlüssig ein Element eingebettet, das mit einem nicht dargestellten Antrieb zur Verformung der Membran 2 in Verbindung steht. Bei dem Element 8 handelt es sich im Ausführungsbeispiel um eine Membranschraube. Das Element 8 steht mit einem Druckstück 4 in Verbindung. Das Druckstück 4 kann innerhalb der Haube in vertikaler Richtung mittels eines nicht dargestellten Antriebs verschoben werden. Das Druckverteilungselement 3 verteilt den vom Druckstück 4 ausgeübten Druck auf den flächigen Bereich 6 der Membran 2.

Das Druckverteilungselement 3 ist im Ausführungsbeispiel als Abstützspirale ausgebildet.

Das Druckstück 4 weist eine innere Öffnung 9 zur Verbindung mit einem Antrieb auf. Nach außen erstrecken sich vier Ausleger 10, sodass das Druckstück 4 in der Draufsicht kreuzförmig ausgebildet ist.

Die Haube 5 weist einen flächigen Bereich 11 auf, der nach unten gewölbt ausgebildet ist. Nach unten erstreckt sich eine umlaufende Erhebung 12.

Mittig weist die Haube 5 einen hohlzylinderförmig ausgebildeten Hals 13 auf, mit einer kreisförmigen Öffnung 14 für nicht dargestellte Antriebselemente, wie beispielsweise eine Spindel.

Die Haube 5 weist einen Hohlraum 15 auf, in dem das Druckstück 4 in vertikaler Richtung verschieblich angeordnet ist. Dabei wird das Druckstück 4 von begrenzenden Wänden des Hohlraums 15 der Haube 5 geführt.

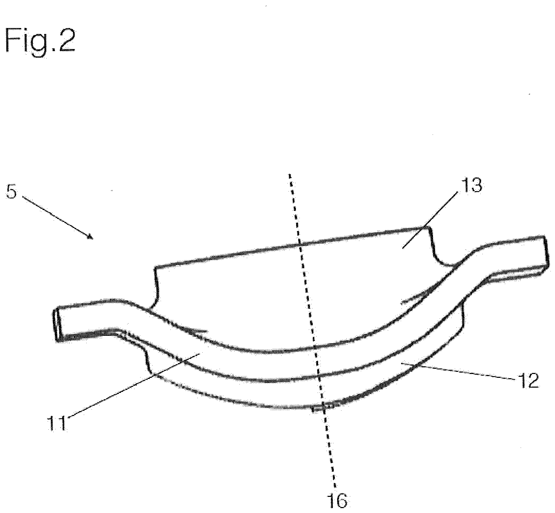

Figur 2 zeigt eine seitliche Ansicht der Haube 5. Von Wandungen der Haube 5 wird eine Kammerung für die Membran 2 begrenzt. Um die erfindungsgemäß gewölbte Kammerung auszubilden, sind die umlaufende Erhebung 12 und/oder der flächige Bereich 11 der Haube gekrümmt ausgeführt und wölben sich in einem Bogen zur Achse 16 nach unten. Die Erhebung 12 und der flächige Bereich 11 weisen die Form eines spiegelsymmetrisch zur Achse 16 ausgebildeten Bogens auf.

Von der Erhebung 12 wird eine seitliche Wandung der gekrümmten Kammerung für die Membran 2 gebildet. Von dem flächigen Bereich 11 der Haube wird eine obere Wandung der Kammerung gebildet.

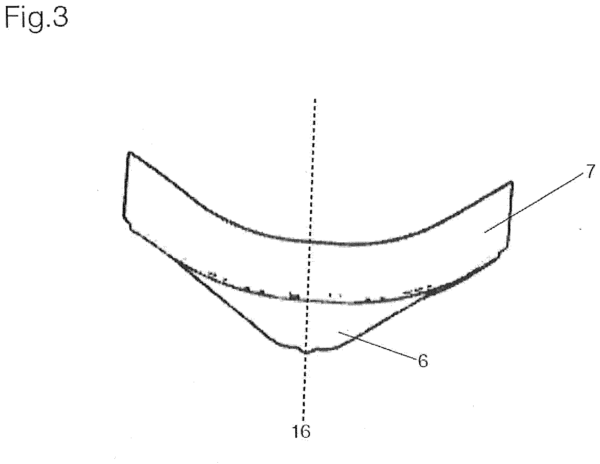

Figur 3 zeigt eine seitliche Ansicht der Membran 2. Der Rand 7 der Membran 2 ist bananenförmig nach unten gekrümmt ausgebildet. Der Rand 7 der Membran 2 bildet einen gewölbten Bogen, der spiegelsymmetrisch zur Achse 16 ausgebildet ist. Auch der tellerförmig ausgebildete flächige Bereich 6 der Membran 2 ist nach unten gewölbt, spiegelsymmetrisch zur Achse 16 ausgebildet.

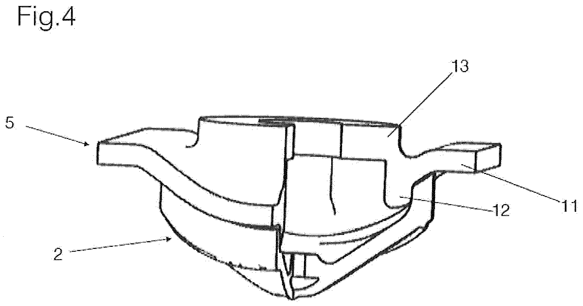

Figur 4 zeigt, dass die Erhebung 12 der Haube 5 eine seitlich begrenzende Wandung für die Membran 2 bildet. Der flächige Bereich 11 der Haube 5 bildet eine nach unten begrenzende Wandung der Kammerung.

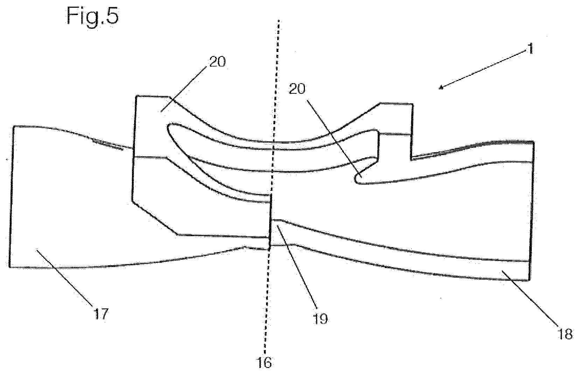

Figur 5 zeigt eine perspektivische Ansicht des Gehäuseteils 1 von oben, wobei ein Viertel zur Teilschnittdarstellung weggelassen wurde.

Das Gehäuseteil 1 ist einstückig, vorzugsweise aus einem metallischen Werkstoff, ausgebildet. Es umfasst einen hohlkegelförmigen ausgebildeten Eingangsbereich 17, durch den das Medium einströmt und einen hohlkegelförmig ausgebildeten Ausgangsbereich 18, durch den das Medium ausströmt. Der Eingangsbereich 17 und/oder der Ausgangsbereich 18 weisen vorzugsweise Anschlüsse zur Verbindung mit anderen Anlageteilen, beispielsweise Rohrleitungen, auf.

Mittig im Inneren weist das Gehäuseteil 1 ein Wehr bzw. einen Steg 19 auf. Das Wehr bzw. der Steg 19 dient als Sitzfläche für einen, vorzugsweise als Dichtlippe ausgebildeten Bereich der Membran 2.

Bei dem Wehr bzw. Steg 19 handelt es sich vorzugsweise um eine quer zur Strömungsrichtung ausgebildete Erhebung.

Weiterhin umfasst das untere Gehäuseteil 1 des Membranventils einen quaderartig ausgebildeten Bereich 20, welcher die Haube 5 tragen kann bzw. über nicht dargestellte Befestigungselemente, wie zum Beispiel Schrauben, mit der Haube 5 verbunden werden kann. Der Bereich 20 des Gehäuseteils 1 bildet gemeinsam mit der Haube 5 eine Kammerung für die Membran 2.

Weiterhin weist das Gehäuseteil 1 eine Auflagefläche 21 auf, die ovalförmig umlaufend mit einer Wölbung ausgebildet ist. In axialer Richtung weist die Wölbung auf der Höhe des Wehres bzw. des Steges 19 ihren tiefsten Punkt auf. Die umlaufende Auflagefläche 21 ist schräg ausgebildet. Die Auflagefläche 21 ist umlaufend und spiegelsymmetrisch zur Achse 16.

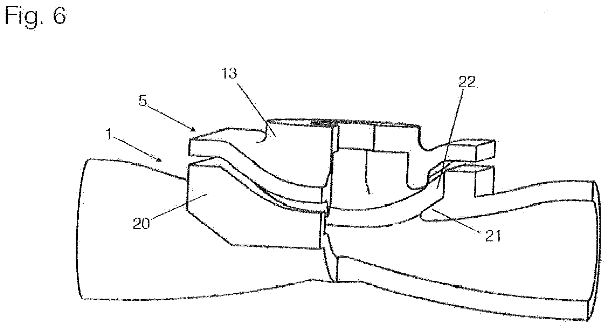

Figur 6 zeigt die von dem Gehäuseteil 1 und der Haube 5 gebildete Kammerung 22 für die Membran 2. Die Membran 2 ist in Figur 6 bewusst nicht dargestellt, um die als Hohlraum dargestellte Kammerung 22 zu verdeutlichen.

Die Kammerung 22 ist als Hohlraum zur Aufnahme des Randes 7 der Membran 2 ausgebildet. Erfindungsgemäß ist die Kammerung 22 gewölbt, sodass sie nicht in einer horizontalen Ebene liegt, sondern nach unten gekrümmt ausgebildet ist.

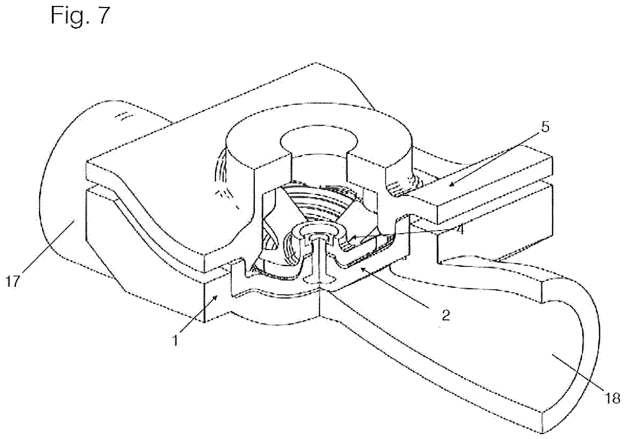

Figur 7 zeigt eine perspektivische Ansicht des Membranventils mit einer Viertelaussparung zur teilweisen Schnittdarstellung. Die Membran 2 dient als Absperrkörper zur dichtenden Trennung von Räumen. Im Ausführungsbeispiel kann die Verformung der Membran 2 über einen Antrieb einer Strömung zwischen dem Eingangsbereich 17 und dem Ausgangsbereich 18 freigegeben oder gesperrt werden bzw. es kann je nach Ventilstellung ein Medium dosiert werden, sodass das Membranventil entweder als reine Schaltarmatur mit Auf-/Zustellung einsetzbar ist oder als Stellarmatur zur Regelung bzw. Dosierung eines Mediums.

Die Membran 2 dient zusätzlich der Abdichtung des Ventils nach außen zur Atmosphäre hin. Dazu ist die Membran 2 in der Kammerung 22 zwischen dem Gehäuseteil 1 und der Haube 5 eingespannt.

## Patentansprüche

1. Ventil mit einer Membran (2), die einen Rand (7) aufweist, der in einer Kammerung (22) angeordnet ist, die von einem Gehäuseteil (1) und einer Haube (5) gebildet wird, wobei das Ventil einen Steg (19) aufweist, wobei der Rand (7) der Membran (2) gewölbt ausgebildet ist, wobei die Wölbung im Bereich des Stegs (19) ihren tiefsten Punkt aufweist und vorzugsweise zur Strömungsrichtung hin und/oder entgegen der Strömungsrichtung ansteigt, **dadurch gekennzeichnet, dass** die Haube (5) einen gewölbt ausgebildeten flächigen Bereich (11) und eine umlaufende, gewölbt ausgebildete Erhebung (12) aufweist, wobei der flächige Bereich (11) der Haube (5) eine obere Begrenzung der Kammerung (22) bildet und die Erhebung (12) ein Vorsprung ist der in Richtung eines von der Membran umschlossenen Hohlraums hineinragt, der eine seitliche Wandung für die gewölbt; ausgebildete Kammerung (22) der Membran (2) bildet, dass das Gehäuseteil (1) eine seitliche Wandfläche aufweist, deren Rand gewölbt ausgebildet ist und einen Teil der Kammerung (22) für die Membran (2) bildet.

2. Ventil nach Anspruch 1, **dadurch gekennzeichnet, dass** das Gehäuseteil (1) eine Auflagefläche (21) aufweist, die gewölbt ausgebildet ist.

3. Ventil nach einem der Ansprüche 1 oder 2, **dadurch gekennzeichnet, dass** das Ventil ein Druckstück (4) aufweist.

4. Ventil nach einem der Ansprüche 1 bis 3, **dadurch gekennzeichnet, dass** das Ventil ein Druckverteilungselement (3) aufweist, das spiralförmig oder ringförmig ausgebildet ist.

5. Ventil nach einem der Ansprüche 1 bis 4, **dadurch gekennzeichnet, dass** der Rand (7) der Membran (2) in vertikaler Richtung nach oben ragt und auf seiner Oberseite eine umlaufende Stirnfläche (23) aufweist, wobei die Stirnfläche (23) gewölbt ausgebildet ist.

## Claims

1. Valve having a diaphragm (2) which has an edge (7) which is arranged in an enclosure (22) formed by a housing part (1) and by a hood (5), wherein the valve has a web (19), wherein the edge (7) of the diaphragm (2) is of curved form, wherein the curve has its lowest point in the region of the web (19) and preferably ascends in the flow direction and/or counter to the flow direction,
**characterized in that**
the hood (5) has an areal region (11) of curved form and a peripheral elevation (12) of curved form, wherein the areal region (11) of the hood (5) forms an upper boundary of the enclosure (22), and the elevation (12) is a projection which projects in the direction of a hollow space surrounded by the diaphragm and which forms a lateral wall for the enclosure (22), of curved form, of the diaphragm (2), and
**in that** the housing part (1) has a lateral wall surface whose edge is of curved form and which forms a part of the enclosure (22) for the diaphragm (2).

2. Valve according to Claim 1, **characterized in that** the housing part (1) has a support surface (21) which is of curved form.

3. Valve according to either of Claims 1 and 2, **characterized in that** the valve has a pressure piece (4) .

4. Valve according to one of Claims 1 to 3, **characterized in that** the valve has a pressure distribution element (3) which is of helical or annular form.

5. Valve according to one of Claims 1 to 4, **characterized in that** the edge (7) of the diaphragm (2) projects upwards in the vertical direction and has a peripheral end surface (23) on its top side, wherein the end surface (23) is of curved form.

## Revendications

1. Soupape comprenant une membrane (2) qui présente un bord (7) qui est disposé dans une chambre (22) qui est formée par une partie de boîtier (1) et une coiffe (5), la soupape présentant une nervure (19), le bord (7) de la membrane (2) étant réalisé sous forme cintrée, la courbure présentant son point le plus bas dans la région de la nervure (19) et montant de préférence dans le sens de l'écoulement et/ou dans le sens opposé à l'écoulement,
**caractérisée en ce que**
la coiffe (5) présente une région plane (11) réalisée sous forme courbe et un rehaussement périphérique (12) réalisé sous forme courbe, la région plane (11) de la coiffe (5) formant une limitation supérieure de la chambre (22) et le rehaussement (12) étant une saillie qui pénètre dans la direction d'une cavité entourée par la membrane, qui forme une paroi latérale pour la chambre (22) de la membrane (2), réalisée sous forme courbe, et
**en ce que** la partie de boîtier (1) présente une surface de paroi latérale dont le bord est réalisé sous forme courbe et forme une partie de la chambre (22) pour la membrane (2).

2. Soupape selon la revendication 1, **caractérisée en ce que** la partie de boîtier (1) présente une surface d'appui (21) qui est réalisée sous forme courbe.

3. Soupape selon l'une quelconque des revendications 1 et 2, **caractérisée en ce que** la soupape présente une pièce de pression (4).

4. Soupape selon l'une quelconque des revendications 1 à 3, **caractérisée en ce que** la soupape présente un élément de répartition de pression (3) qui est réalisé en forme de spirale ou de bague.

5. Soupape selon l'une quelconque des revendications 1 à 4, **caractérisée en ce que** le bord (7) de la membrane (2) fait saillie vers le haut dans la direction verticale et présente sur son côté supérieur une surface frontale périphérique (23), la surface frontale (23) étant réalisée sous forme courbe.
